# EUROPÄISCHE PATENTSCHRIFT

(11) **EP 3 170 437 B1**
(45) Veröffentlichungstag und Bekanntmachung des Hinweises auf die Patenterteilung: **08.12.2021**
(21) Anmeldenummer: 16196142.0
(22) Anmeldetag: 28.10.2016
(51) Int. Cl.: A47L 15/42

(54) **GESCHIRRSPÜLMASCHINE SOWIE VERFAHREN ZUM BETREIBEN EINER SOLCHEN**
DISHWASHER AND METHOD FOR OPERATING SAME
LAVE-VAISSELLE ET SON PROCÉDÉ DE FONCTIONNEMENT

(30) Priorität: 20.11.2015 DE 102015222917
(43) Veröffentlichungstag der Anmeldung: 24.05.2017
(73) Patentinhaber: BSH Hausgeräte GmbH, 81739 München (DE)
(72) Erfinder: Heinle, Martin, 89353 Glött (DE); Nannt, Hans-Peter, 89547 Gerstetten (DE); Schmidt, Ulrike, 89537 Giengen an der Brenz (DE); Stickel, Martin, 89537 Giengen (DE)

(56) Entgegenhaltungen:
- EP-A1- 2 526 849
- EP-A2- 1 142 527
- EP-A2- 1 690 489
- EP-A2- 2 193 741
- DE-A1- 2 730 489
- DE-A1- 19 622 882

## Beschreibung

Die vorliegende Erfindung betrifft eine Geschirrspülmaschine mit einem der Aufnahme von zu reinigendem Spülgut dienenden Aufnahmeraum, wobei der Aufnahmeraum durch Wandungen eines Spülbehälters und eine Tür nach außen hin begrenzt ist, und wobei die Geschirrspülmaschine zumindest einen Wärmespeicher aufweist, der außerhalb des Spülbehälters angeordnet ist und der von zumindest einer Wandung des Spülbehälters zumindest größtenteils durch einen Spalt beabstandet ist.

Ferner wird ein Verfahren zum Betreiben einer Geschirrspülmaschine vorgeschlagen, wobei die Geschirrspülmaschine einen der Aufnahme von zu reinigendem Spülgut dienenden Aufnahmeraum aufweist, wobei der Aufnahmeraum durch Wandungen eines Spülbehälters und eine Tür nach außen hin begrenzt ist, und wobei die Geschirrspülmaschine zumindest einen Wärmespeicher aufweist, der außerhalb des Spülbehälters angeordnet ist und der von zumindest einer Wandung des Spülbehälters zumindest größtenteils durch einen Spalt beabstandet ist.

Geschirrspülmaschinen sind im Stand der Technik bekannt und dienen in der Regel der Reinigung von verunreinigtem Geschirr. Bei dem Wärmespeicher kann es sich beispielsweise um einen Wassertank handeln, in den am Ende eines Reinigungsabschnitts eines Spülprogramms Wasser gepumpt wird, um die Wärme der innerhalb der Spülbehälters zirkulierenden Spülflotte (Wasser bzw. Wasser mit Reinigungs- und/oder Klarspülmittel und/oder Verunreinigungen versetzt) aufzunehmen. Das im Wärmespeicher aufgewärmte Wasser kann schließlich bei einem weiteren Programmabschnitt des Spülprogramms, bei dem warmes Wasser benötigt wird (beispielsweise einem Nachspülgang), in den Spülbehälter gepumpt werden, so dass die Energieeffizienz gegenüber einer Geschirrspülmaschine ohne Wärmespeicher verbessert ist.

Z.B. beim Haushaltsgerät (wie z.B. Geschirrspülmaschine) der EP 2 193 741 A2 ist außerhalb dessen Bottichs ein Wärmekopplungstank zwischen einem Wärmespeichertank und einer Wandung des Bottichs vorgesehen. Mittels eines Füllmittels wie z.B. einer Pumpe, kann ein Kopplungsfluid, das mindestens teilweise aus Wasser besteht, programmgesteuert dem Wärmekopplungstank zugeführt oder aus diesem weggeführt werden. Dabei wird der Wärmekopplungstank in einer Prozessphase des Haushaltsgeräts leer gemacht, wenn ein hoher Wärmewiderstand zwischen dem Wärmespeichertank und der Wandung des Bottichs gewünscht ist.

Die EP 1 142 527 A2 sieht außerhalb des Spülbehälters einer Geschirrspülmaschine einen Luftkanal mit eingefügtem Gebläse vor, der eingangsseitig sowie ausgangsseitig mit dem Spülraum, d.h. Aufnahmeraum 2 des Spülbehälters verbunden ist.

Aufgabe der vorliegenden Erfindung ist es, eine Geschirrspülmaschine mit besonders hoher Energieeffizienz vorzuschlagen.

Die Aufgabe wird bei einer Geschirrspülmaschine der eingangs genannten Art dadurch gelöst, dass der Spalt Teil eines abgeschlossenen und mit einem Gas, vorzugsweise mit Luft, gefüllten Hohlraums ist oder einen solchen bildet, wobei der Hohlraum keine Fluidverbindung mit dem Aufnahmeraum aufweist, und wobei die Geschirrspülmaschine wenigstens einen Lüfter aufweist, der in den Hohlraum integriert ist und mit einer Steuer- und/oder Regeleinheit der Geschirrspülmaschine in Wirkverbindung steht, die ausgebildet ist, den Lüfter lediglich während ausgewählter Programmabschnitte eines in der Steuer- und/oder Regeleinheit hinterlegten Spülprogramms zu betreiben und damit eine zeitweise Umwälzung des sich im Hohlraum befindlichen Gases zu bewirken.

Auf diese Weise ist es möglich, die Wärmeübertragung zwischen dem Spülbehälter bzw. der mit dem Spülbehälter in Kontakt stehenden bzw. kommenden Spülflotte und dem Wärmespeicher zu regulieren. Wird der Lüfter betrieben, so verbessert sich die Wärmeübertragung durch die Bewegung des innerhalb des Hohlraums zirkulierenden Gases. Wird der Lüfter hingegen nicht betrieben, so ist die Wärmeübertragung aufgrund des sich nicht bewegenden Gases minimal, so dass der Wärmespeicher gegenüber dem Spülbehälter bei Bedarf isoliert werden kann, wobei dies immer dann sinnvoll ist, wenn keine Wärmeübertragung vom Spülbehälter auf den Wärmespeicher gewünscht ist. Dies ist beispielsweise zu Beginn oder während eines Reinigungsabschnitts eines Spülprogramms der Fall, da hier die innerhalb des Spülbehälters vorhandene bzw. zirkulierende Spülflotte, z.B. mit Hilfe eines Heizelements der Geschirrspülmaschine, oder, wie nachfolgend noch näher erläutert, mit Hilfe einer Wärmepumpenanordnung erwärmt wird.

Schließlich kann der Lüfter auch derart ausgebildet sein, dass er mit unterschiedlichen Drehzahlen betreibbar ist, so dass die Wärmeübertragung variabel reguliert werden kann.

Da der Hohlraum zudem keine Fluidverbindung mit dem Spülbehälter aufweist, kann eine Kontamination der Spülflotte bzw. des Spülguts mit Verunreinigungen oder Mikroorganismen, die sich eventuell in dem Hohlraum befinden, ausgeschlossen werden. Der Hohlraum ist also gegenüber der die Geschirrspülmaschine umgebenden Atmosphäre und auch dem Aufnahmeraum hermetisch abgedichtet, so dass keinerlei Austausch des im Hohlraum vorhandenen Gases mit der die Geschirrspülmaschine umgebenden oder innerhalb des Aufnahmeraums vorhandenen Luft stattfinden kann.

Der Hohlraum ist vorzugsweise als um den Spülbehälter umlaufender Hohlraum ausgebildet, so dass das Gas um den Spülbehälter herum zirkulieren und hierbei eine maximale Wärmeübertragung zwischen dem Spülbehälter und dem Wärmespeicher bewirken kann. Insbesondere ist es von Vorteil, wenn der Hohlraum drei flächenförmige und miteinander in Fluidverbindung stehende Flächenspalte umfasst, die in einer Frontansicht auf die Geschirrspülmaschine (d. h. mit Blick auf deren Tür), im Bereich der beiden Seiten und im Deckenbereich angeordnet und die im unteren Bereich der Geschirrspülmaschine mit einer Gasleitung, z. B. einem Rohr, oder einem weiteren Flächenspalt verbunden sein sollten, so dass das Gas beim Betrieb des Lüfters durch den die genannten Spalte und die Gasleitung umfassenden Hohlraum und damit um den Spülbehälter herum zirkuliert.

Generell sei an dieser Stelle klargestellt, dass sich das Gas prinzipiell zwischen einer oder mehreren nach außen weisenden Oberflächen einer oder mehrerer Wandungen des Spülbehälters und einer oder mehreren nach innen weisenden Oberfläche des Wärmespeichers angeordnet sein sollte, wobei zumindest ein Teil der genannten Oberflächen auch mit einem flächigen Material, z. B. Bitumen, beschichtet sein könnte.

Bei dem Wärmespeicher kann es sich beispielsweise um einen Tank handeln, in dem sich eine Flüssigkeit (z. B. Wasser oder eine Salzlösung) oder ein Feststoff befindet. Vorzugsweise ist in dem Wärmespeicher ein Phase Change Material (PCM) als Wärmespeichermaterial angeordnet, wie dies im Folgenden noch näher erläutert werden wird.

Gemäß einer vorteilhaften Weiterbildung der Erfindung erstreckt sich der Spalt zumindest über den Großteil einer, vorzugsweise über den Großteil zweier oder sogar dreier benachbarter Wandungen des Spülbehälters (wobei in diesem Zusammenhang auch der Deckenbereich als Wandung anzusehen ist). Der Spalt ist insbesondere als Flächenspalt ausgebildet oder weist mehrere flächenförmige Spaltabschnitte auf, d. h. der Spalt hat zumindest größtenteils eine senkrecht zur jeweils benachbarten Wandung des Spülbehälters verlaufende Breite, die um ein Vielfaches kleiner ist als seine parallel zur entsprechenden Wandung verlaufende räumliche Ausdehnung. Vorzugsweise erstreckt sich der Spalt über zwei seitliche Wandungen und die rückseitige, d. h. der Tür abgewandte, und/oder die obere Wandung der Geschirrspülmaschine.

Nach einer vorteilhaften Weiterbildung der Erfindung erstreckt sich der Spalt über zwei seitliche Wandungen und eine obere Wandung, so dass sich in einer Frontansicht der Geschirrspülmaschine, d. h. mit Blick auf die Tür, ein U-förmiger Spalt ergibt, der sich mit Draufsicht auf die U-Form nach hinten erstreckt. Im Übrigen sei an dieser Stelle generell darauf hingewiesen, dass sich der Spalt vorzugsweise und zumindest größtenteils parallel zu den jeweils benachbarten Wandungen des Spülbehälters erstreckt. Gleiches gilt für die an den Spalt angrenzenden Wände des Wärmespeichers. Sind die im Bereich der seitlichen Wandungen verlaufende Abschnitte des Spalts schließlich unterhalb des Spülbehälters durch einen weiteren Spaltabschnitt oder eine Rohrleitung strömungstechnisch miteinander verbunden, so entsteht ein um den Spülbehälter umlaufender Hohlraum, durch den das Gas beim Betrieb des Lüfters zirkulieren kann.

Gemäß einer vorteilhaften Weiterbildung der Erfindung weist der Spalt zumindest abschnittsweise, vorzugsweise größtenteils, eine senkrecht zur benachbarten Wandung verlaufende Dicke auf, deren Betrag 0,5 mm bis 15 mm, vorzugsweise 1 mm bis 5 mm, beträgt. Liegt der Abstand in dem genannten Bereich, so ist bei stillstehendem Lüfter eine gute Isolierung des Spülbehälters gegenüber dem Wärmespeicher garantiert. Gleichzeitig ist der Platzbedarf des Spalts relativ gering, so dass keine signifikante Verringerung des Spülbehältervolumens gegenüber einer herkömmlichen Geschirrspülmaschine mit gleichen äußeren Abmessungen gegeben ist.

Nach einer vorteilhaften Weiterbildung der Erfindung weist der Spalt einen Gaseinlass und einen Gasauslass auf, wobei sich zwischen dem Gaseinlass und dem Gasauslass eine, vorzugsweise rohrförmige, Gasleitung erstreckt, und wobei der Hohlraum durch den Spalt und die Gasleitung gebildet ist. Beispielsweise wäre es denkbar, dass sich der Hohlraum, wie oben beschrieben, U-förmig um den Spülbehälter erstreckt, wobei die beiden Schenkel der U-Form, vorzugsweise an ihren äußeren Enden, mit der genannten Gasleitung miteinander verbunden sind. Der Hohlraum umschließt den Spülbehälter in einer Frontansicht der Geschirrspülmaschine somit vollständig, wobei sich die Gasleitung zumindest abschnittsweise, vorzugsweise größtenteils, unterhalb des Spülbehälters erstreckt. Der Lüfter (bei dem es sich um einen Ventilator oder ein Gebläse handeln kann) ist vorzugsweise in die Gasleitung integriert.

Gemäß einer vorteilhaften Weiterbildung der Erfindung ist somit der Gaseinlass im Bereich einer ersten seitlichen Wandung des Spülbehälters und der Gasauslass im Bereich einer zweiten seitlichen Wandung des Spülbehälters angeordnet. Bei aktivem Lüfter strömt das Gas somit durch die Gasleitung, über den Gaseinlass in den Spalt und nach Passieren des Spalts über den Gasauslass wieder in die Gasleitung, so dass das Gas im Umluftbetrieb zirkuliert und hierbei eine gute Wärmeübertragung zwischen dem Spülbehälter und dem Wärmespeicher garantiert.

Nach einer vorteilhaften Weiterbildung der Erfindung ist der Wärmespeicher als Latentwärmespeicher ausgebildet. Bei einem Latentwärmespeicher handelt es sich um einen Wärmespeicher mit einem so genannten Phase Change Material (Phasenwechselmaterial), d. h. mit einem Wärmespeichermaterial, dessen latente Schmelzwärme, Lösungswärme oder Absorptionswärme wesentlich größer ist als die Wärme, die sie aufgrund ihrer normalen spezifischen Wärmekapazität (ohne den Phasenumwandlungseffekt) speichern können. Vorzugsweise sollte das Phase Change Material dabei eine Phasenumwandlungstemperatur aufweisen, deren Betrag so liegt, dass die Phasenumwandlung (d. h. von fest nach flüssig) während eines Programmabschnitts erfolgt, bei dem die Spülflotte in erwärmtem Zustand vorliegt, um möglichst viel Wärme von der Spülflotte übernehmen und diese anschließend wieder auf in den Spülbehälter einzuleitendes kaltes Wasser übertragen zu können (wobei hier die Phasenumwandlung in die entgegengesetzte Richtung, d. h. von flüssig nach fest, abläuft).

Gemäß einer vorteilhaften Weiterbildung der Erfindung ist die Steuer- und/oder Regeleinheit ausgebildet, den Lüfter während eines Trocknungsabschnitts, während dessen eine Trocknung des sich im Spülbehälter befindlichen Spülguts gewünscht ist, mit höherer Drehzahl zu betreiben als während einer Anfangsphase eines Reinigungsabschnitts, in dem das sich im Spülbehälter befindliche Spülgut mit erwärmter Spülflotte zur Reinigung des Spülguts beaufschlagt wird (um die Wärmeabfuhr während des Trocknungsabschnitts aus dem Spülbehälter zu forcieren). Generell kann der Lüfter während des kompletten Reinigungsabschnitts oder auch nur während zeitlicher Abschnitte desselben, insbesondere zu Beginn, während dessen eine Erwärmung der Spülflotte erfolgt, mit verminderter Drehzahl betrieben werden. Ebenso kann der Lüfter während der entsprechenden Zeiträume auch vollständig stillgesetzt werden, um die durch das stillstehende Gas bewirkte Isolationswirkung des Spalts zu optimieren.

Nach einer vorteilhaften Weiterbildung der Erfindung weist die Geschirrspülmaschine wenigstens einen Sensor auf, mit dessen Hilfe sich eine oder mehrere physikalische Kenngrößen, vorzugsweise die Temperatur oder die Viskosität, des Wärmespeichermaterials des Wärmespeichers überwachen lassen. Zudem sollte die Steuer- und/oder Regeleinheit der Geschirrspülmaschine ausgebildet ist, die Drehzahl des Lüfters unter Berücksichtigung des Betrags der überwachten Kenngröße(n) zu regulieren. Beispielsweise wäre es denkbar, die Drehzahl während des Endes eines Reinigungsabschnitts gegenüber einem Standardwert zu erhöhen, wenn die Temperatur des Wärmespeichermaterials über einem Grenzwert liegt, um die Wärmeübertragung trotz geringer Temperaturunterschiede zwischen dem Spülbehälter und dem Wärmespeichermaterial zu verbessern. Ebenso könnte die Drehzahl gegen Ende eines Trocknungsabschnitts erhöht werden, da hier das Wärmespeichermaterial bereits eine relativ hohe Temperatur aufweist und eine besonders gute Wärmeübertragung nötig ist, um weitere Wärme von den Wandungen des Spülbehälters abzuführen und hierbei eine Kondensation von innerhalb des Spülbehälters vorhandenem Wasserdampf zu bewirken.

Gemäß einer vorteilhaften Weiterbildung der Erfindung umfasst die Geschirrspülmaschine eine Wärmepumpenanordnung, mit deren Hilfe Wärme vom Wärmespeicher auf eine während des Betriebs der Geschirrspülmaschine zumindest zeitweise innerhalb der Geschirrspülmaschine zirkulierende Spülflotte übertragbar ist. Die Wärmepumpenanordnung umfasst vorzugsweise einen Verdampfer, ein Leitungssystem für ein Wärmeträgermedium, ein Expansionsventil, einen Kondensator sowie einen Verdichter für das durch Wärmeaufnahme verdampfte Wärmeträgermedium. Als Wärmeträgermedium kommt vorzugsweise eine Flüssigkeit zum Einsatz, deren Verdampfungspunkt vorzugsweise niedriger als die Schmelztemperatur des PCM's liegt. Strömt diese Flüssigkeit mit Hilfe einer Pumpe durch das Leitungssystem und hierbei in den Bereich bzw. durch das erwärmte Wärmespeichermaterial, so verdampft es, wobei der im Bereich des Wärmespeichermaterials vorhandene Abschnitt der Wärmepumpenanordnung (der beispielsweise durch einen Abschnitt des Leitungssystems gebildet sein kann) als Verdampfer wirkt. Im weiteren Strömungsverlauf gelangt das verdampfte Wärmespeichermaterial in den Bereich des Verdichters und wird dort verdichtet, wobei es sich stark erwärmt. Schließlich gelangt es in den Bereich eines als Kondensator wirkenden Wärmetauschers, der beispielsweise im Bereich eines Pumpensumpfs der Geschirrspülmaschine angeordnet ist und mit dessen Hilfe Wärme vom Wärmeträgermedium auf die Spülflotte übertragbar ist, wobei das Wärmespeichermaterial wieder verflüssigt wird. Anschließend wird der Druck des Wärmeträgermediums im Bereich des Expansionsventil verringert, wobei sich das Wärmeträgermedium abkühlt und schließlich erneut durch den Wärmespeicher geleitet wird, um dort unter Wärmeaufnahme wieder zu verdampfen. Im Ergebnis ist es mit Hilfe der Wärmepumpenanordnung also möglich, Wärme aus dem Wärmespeichermaterial auf die Spülflotte zu übertragen, ohne dass das Wärmespeichermaterial direkt mit der Spülflotte in Kontakt gelangt.

Nach einer vorteilhaften Weiterbildung der Erfindung umfasst die Wärmepumpenanordnung ein Verdampferrohr, das zumindest abschnittsweise vom Wärmespeichermaterial umgeben ist. Insbesondere ist es von Vorteil, wenn sich das Verdampferrohr, das Teil des oben genannten Leitungssystems der Wärmepumpenanordnung ist, zumindest teilweise in ein Phase Change Material des Wärmespeichers eingebettet ist und dieses beispielsweise schlangen- oder mäanderförmig durchzieht. Selbstverständlich kann das Verdampferrohr auch mehrere Abzweigungen aufweisen, die sich innerhalb oder nach Passieren des Wärmespeichermaterials wieder vereinen. Das Verdampferrohr kann sich über alle Bereiche des Wärmespeichers erstrecken, die dem genannten Spalt benachbart sind. Denkbar ist es jedoch ebenso, dass der Wärmespeicher Abschnitte aufweist, die nicht von dem Verdampferrohr durchzogen sind. Beispielweise kann der Spülbehälter eine oder mehrere Wandungen aufweisen, deren benachbarter Abschnitt des Wärmespeichers nicht von dem Verdampferrohr durchzogen ist.

Schließlich sei ausdrücklich darauf hingewiesen, dass die Steuer- und/oder Regeleinheit ausgebildet sein kann, die Geschirrspülmaschine gemäß nachfolgender Beschreibung zu betreiben, wobei die jeweiligen Verfahrensmerkmale einzeln oder in beliebiger Kombination verwirklicht werden können, sofern hierdurch keine technischen Widersprüche entstehen.

Im Weiteren wird ein Verfahren zum Betreiben einer Geschirrspülmaschine beschrieben (wobei die bisher oder nachfolgend offenbarten körperlichen Merkmale der Geschirrspülmaschine bzw. deren beschriebener Komponenten einzeln oder in beliebiger Kombination verwirklicht sein können).

Die Geschirrspülmaschine weist einen der Aufnahme von zu reinigendem Spülgut dienenden Aufnahmeraum auf, wobei der Aufnahmeraum durch Wandungen eines Spülbehälters und eine Tür nach außen hin begrenzt ist, und wobei die Geschirrspülmaschine zumindest einen Wärmespeicher aufweist, der außerhalb des Spülbehälters angeordnet ist und der von zumindest einer Wandung des Spülbehälters zumindest größtenteils durch einen Spalt beabstandet ist. Insbesondere ist vorgesehen, dass der Spalt Teil eines abgeschlossenen und mit einem Gas gefüllten Hohlraums der Geschirrspülmaschine ist und das Gas während wenigstens eines Programmabschnitts eines Spülprogramms, während dessen Wärme vom Spülbehälter bzw. der innerhalb der Geschirrspülmaschine zirkulierenden Spülflotte auf den Wärmespeicher übertragen werden soll, mit Hilfe eines Lüfters innerhalb des Hohlraums umgewälzt wird, um die Wärmeübertragung zwischen dem Spülbehälter und dem Wärmespeicher zu verbessern.

Der Lüfter wird also während eines oder mehrerer ausgewählter Programmabschnitte eines in einer Steuer- und/oder Regeleinheit der Geschirrspülmaschine hinterlegten Spülprogramms betrieben, so dass eine zeitweise Umwälzung des sich im Hohlraum befindlichen Gases bewirkt wird, um hierdurch die Wärmeübertragung zwischen dem Spülbehälter bzw. der darin vorhandenen Spülflotte oder des im Spülbehälter vorhandenen Wasserdampfs (der zumindest während eines Trocknungsabschnitts innerhalb des Spülbehälters durch Verdampfen von Wassers entsteht) und dem Wärmespeicher zu verbessern. Vorzugsweise kommt als Gas Luft zum Einsatz. Insbesondere wird der Lüfter außerhalb der entsprechenden Programmabschnitte nicht betrieben, d. h. er steht zu diesen Zeiten still. Alternativ ist es auch möglich, den Lüfter während bestimmter Programmabschnitte mit geringerer Drehzahl zu betreiben als während Programmabschnitten, in denen eine Wärmeübertragung vom Spülbehälter auf den Wärmespeicher gewünscht ist.

In jedem Fall ist vorgesehen, dass das Gas während wenigstens eines Programmabschnitts, während dessen Wärme vom Spülbehälter auf den Wärmespeicher übertragen werden soll, umgewälzt wird. Hierdurch wird der Wärmetransport vom Spülbehälter auf den Wärmespeicher verbessert, da die Luft innerhalb des Hohlraums durchmischt wird. Die Wärmeübertragung zwischen dem Spülbehälter und dem Wärmespeicher wird damit gegenüber dem Fall verbessert, in dem die Luft nicht umgewälzt wird. Im Ergebnis kann also Wärme vom Spülbehälter und damit auch von der darin zirkulierenden Spülflotte bzw. des darin vorhandenen Wasserdampfs abgeführt und auf den Wärmespeicher übertragen werden (hinsichtlich des Wärmespeichers wird auf die obige bzw. nachfolgende Beschreibung verwiesen).

Selbstverständlich ist es denkbar, den Lüfter während unterschiedlicher Programmabschnitte bzw. verschiedener Zeitabschnitte eines Programmabschnitts mit unterschiedlichen Drehzahlen zu betreiben.

Gemäß einer vorteilhaften Weiterbildung der Erfindung wird das im Hohlraum vorhandene Gas während eines Trocknungsabschnitts des Spülprogramms, während dessen eine Trocknung des sich im Spülbehälter befindlichen Spülguts gewünscht ist, zumindest zeitweise umgewälzt, um Wärme von dem Spülbehälter auf den Wärmespeicher zu übertragen. Durch die Umwälzung der Luft kann die Wärme von dem Spülbehälter bzw. den dem Spalt benachbarten Wandabschnitten besonders schnell abgeführt werden. Dies beschleunigt wiederum die Kondensation von innerhalb des Spülbehälters vorhandenem Wasserdampf an den Wandabschnitten, wobei der Wasserdampf entsteht, weil das Spülgut vor Beginn oder am Anfang des Trocknungsabschnitts, z. B. durch entsprechend erwärmte Spülflotte, erwärmt wurde. Die Wärme wird während des Trocknungsschritts an das Wasser abgegeben, das daraufhin verdampft bzw. verdunstet. Durch das Umwälzen des im Hohlraum vorhandenen Gases wird schließlich die Kondensation des Wasserdampfs an den nach innen weisenden Oberflächen des Spülbehälters beschleunigt bzw. forciert, so dass es schließlich zu einer raschen Trocknung des Spülguts kommt.

Nach einer vorteilhaften Weiterbildung der Erfindung wird das im Hohlraum vorhandene Gas am Ende eines Reinigungsabschnitts des Spülprogramms, während dessen das sich im Spülbehälter befindliche Spülgut mit erwärmter Spülflotte zur Reinigung des Spülguts beaufschlagt wird, zumindest zeitweise umgewälzt, um Wärme von dem Spülbehälter auf den Wärmespeicher zu übertragen. Die der Spülflotte entzogene Wärme wird hierdurch im Wärmespeicher zwischengespeichert und kann schließlich in einem nachfolgenden Programmabschnitt, beispielsweise während eines dem Trocknungsabschnitt vorangehenden Klarspülabschnitt, wieder an die Spülflotte übertragen werden, wobei dies vorzugsweise mit Hilfe der bereits beschriebenen Wärmepumpenanordnung erfolgt. Während des Klarspülabschnitts wird auf diese Weise Wärme in die Spülflotte und damit auch auf das mit der Spülflotte in Kontakt kommende Spülgut übertragen. Dies stellt schließlich sicher, dass das im Spülgut anhaftende Wasser im nachfolgenden Trocknungsabschnitt zügig verdampft bzw. verdunstet, um anschließend an den nach innen weisenden Oberflächen des Spülbehälters zu kondensieren, die durch das Umwälzen des Gases innerhalb des Hohlraums gekühlt werden.

Gemäß einer vorteilhaften Weiterbildung der Erfindung wird das im Hohlraum vorhandene Gas während eines Trocknungsabschnitts des Spülprogramms, während dessen eine Trocknung des sich im Spülbehälter befindlichen Spülguts gewünscht ist, zumindest zeitweise stärker umgewälzt als während einer Anfangsphase eines Reinigungsabschnitts des Spülprogramms, während dessen das sich im Spülbehälter befindliche Spülgut mit erwärmter Spülflotte zur Reinigung des Spülguts beaufschlagt wird. Während zumindest zu Beginn des Reinigungsabschnitts eine Isolierung des Spülbehälters erwünscht ist, soll während des Trocknungsabschnitts möglichst viel Wärme pro Zeit aus dem Spülbehälter bzw. von dessen Wandungen abgeführt werden, um eine Kondensation von innerhalb des Spülbehälters vorhandenem Wasserdampf zu bewirken. Hierdurch wird die Trocknung des Spülguts beschleunigt und das Wärmespeichermaterial erwärmt. Die aufgenommene Wärme kann schließlich in einem nachfolgenden Spülprogramm wieder, beispielsweise mit Hilfe der oben beschriebenen Wärmepumpenanordnung, auf die Spülflotte bzw. auf in den Spülbehälter einzuleitendes Frischwasser übertragen werden.

Nach einer vorteilhaften Weiterbildung der Erfindung umfasst die Geschirrspülmaschine eine Wärmepumpenanordnung, wobei mit Hilfe der Wärmepumpenanordnung während definierter Abschnitte des Spülprogramms Wärme vom Wärmespeicher auf die Spülflotte übertragen wird. Hinsichtlich einzelner Merkmale der Wärmepumpenanordnung wird auf die bisherige bzw. nachfolgende Beschreibung verwiesen.

Gemäß einer vorteilhaften Weiterbildung der Erfindung wird die im Hohlraum vorhandene Luft zumindest zeitweise umgewälzt, während mit Hilfe der Wärmepumpenordnung Wärme vom Wärmespeicher auf die Spülflotte übertragen wird. Zwar mag dies auf den ersten Blick kontraproduktiv erscheinen, da hierdurch Wärme, die mit Hilfe der Wärmepumpenanordnung aus dem Wärmespeicher entfernt wird, wieder auf den Wärmespeicher übertragen wird. Hieraus ergibt sich jedoch der folgende Vorteil: Der Wirkungsgrad von Wärmepumpenanordnungen ist in der Regel von der Temperaturdifferenz zwischen der Wärmequelle (hier der Wärmespeicher) und dem Medium abhängig, an das die Wärme über den oben beschriebenen Kondensator abgegeben wird (hier die Spülflotte). Würde nun während der Programmabschnitte, während der dem Wärmespeicher Wärme entzogen wird und an die Spülflotte abgegeben wird, keine Umwälzung des im Hohlraum vorhandenen Gases erfolgen, so würde die genannte Temperaturdifferenz übermäßig weit ansteigen und damit einen schlechten Wirkungsgrad zur Folge haben. Um dem entgegenzuwirken, ist es von Vorteil, den Lüfter während der entsprechenden Programmabschnitte zumindest zeitweise zu betreiben. Hierdurch wird Wärme vom Spülbehälter auf den Wärmespeicher rückübertragen, so dass die genannte Temperaturdifferenz wieder auf einen im Hinblick auf den Wirkungsgrad akzeptablen Wert fällt. Im Ergebnis sinkt der Gesamtenergiebedarf der Geschirrspülmaschine gegenüber dem Fall, bei dem der Lüfter während Programmabschnitten, in denen Wärme vom Wärmespeicher auf die Spülflotte übertragen wird, still steht.

Nach einer vorteilhaften Weiterbildung der Erfindung wird der Lüfter während Abschnitten, in denen mit Hilfe der Wärmepumpenordnung Wärme vom Wärmespeicher auf die Spülflotte übertragen werden soll (z. B. während einer Anfangs- bzw. Aufheizphase eines Reinigungsabschnitts oder während des oben beschriebenen Klarspülabschnitts), zumindest zeitweise pulsartig betrieben. Denkbar wäre es beispielsweise, den Lüfter immer nur für maximal 10 Sekunden zu betreiben und dann wieder für höchstens 10 Sekunden stillzusetzen oder mit verminderter Drehzahl zu betreiben.

Gemäß einer vorteilhaften Weiterbildung der Erfindung wird der Lüfter während Abschnitten, in denen mit Hilfe der Wärmepumpenordnung Wärme vom Wärmespeicher auf die Spülflotte übertragen wird, zumindest abschnittsweise mit geringerer Drehzahl betrieben, als während Abschnitten, in denen Wärme bei deaktivierter Wärmepumpenanordnung vom Spülbehälter auf den Wärmespeicher übertragen wird, um die Spülflotte abzukühlen oder eine Kondensation von im Spülbehälter vorhandenem Wasserdampf zu bewirken. Während nämlich während der zuerst genannten Abschnitte nur eine geringe Wärmeübertragung notwendig ist, um, wie oben beschrieben, den Wirkungsgrad zu erhöhen, ist es während der nachfolgend genannten Abschnitte erwünscht, möglichst viel Wärme in möglichst kurzer Zeit auf den Wärmespeicher zu übertragen.

Nach einer vorteilhaften Weiterbildung der Erfindung wird die Drehzahl des Lüfters mit Hilfe der Steuer- und/oder Regeleinheit unter Berücksichtigung einer oder mehrerer physikalischer Kenngrößen eines Wärmespeichermaterials des Wärmespeichers reguliert. Beispielsweise könnte bei der Regulierung der Drehzahl, wie oben beschrieben, die Temperatur oder die Viskosität des Wärmespeichermaterials berücksichtigt werden (unter den Begriff "Regulierung" fällt neben dem reinen Ein- und Ausschalten des Lüfters insbesondere auch die Regelung der Drehzahl desselben, so dass dieser generell mit unterschiedlichen Drehzahlen betrieben werden kann, um die Wärmeübertragung zwischen Spülbehälter und Wärmespeicher bedarfsgemäß zu variieren).

Die vorstehend erläuterten und/oder in den Unteransprüchen wiedergegebenen vorteilhaften Aus- und Weiterbildungen der Erfindung können schließlich generell - außer z. B. in den Fällen eindeutiger Abhängigkeiten oder unvereinbarer Alternativen - einzeln oder aber auch in beliebiger Kombination miteinander zur Anwendung kommen.

Weitere Vorteile der Erfindung sind in dem nachfolgenden Ausführungsbeispiel beschrieben. Es zeigen, jeweils schematisch:
- **Figur 1**: eine geschnittene Frontansicht einer teilweise dargestellten und aus dem Stand der Technik bekannten Geschirrspülmaschine,
- **Figur 2**: eine geschnittene Frontansicht einer teilweise dargestellten erfindungsgemäß ausgebildeten Geschirrspülmaschine, und
- **Figur 3**: einen möglicher Drehzahlverlauf des Lüfters im Verlauf eines Spülprogramms sowie daraus resultierende Temperaturverläufe.

In den folgenden Figuren sind einander entsprechende Teile mit denselben Bezugszeichen versehen. Dabei sind nur diejenigen Bestandteile einer Geschirrspülmaschine gezeigt und erläutert, welche für das Verständnis der Erfindung erforderlich sind. Es versteht sich von selbst, dass die erfindungsgemäße Geschirrspülmaschine weitere Teile und Baugruppen umfassen kann.

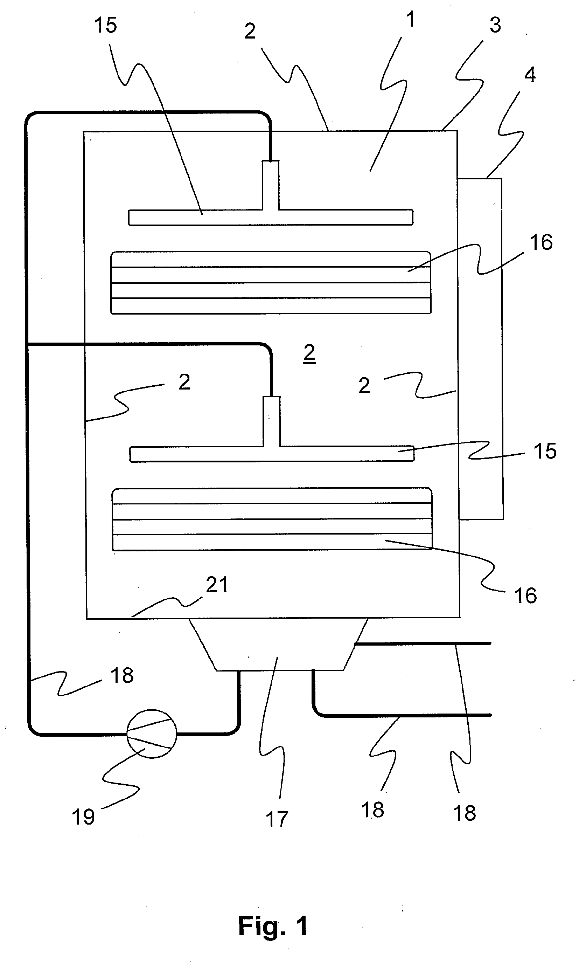

Figur 1 zeigt eine schematische Schnittdarstellung einer Geschirrspülmaschine, wobei der Schnitt parallel zur Blatteben verläuft, so dass die frontseitige Tür, mit der die Geschirrspülmaschine verschließbar ist, nicht sichtbar ist (da weggeschnitten).

Prinzipiell weist die Geschirrspülmaschine einen im Inneren einer nicht gezeigten Hülle angeordneten Spülbehälter 3 auf, der in der Regel zwei seitliche Wandungen 2, eine hintere (parallel zur Blattebene verlaufende) Wandung 2, eine obere Wandung 2 und einen Bodenbereich 21 aufweist. Der Spülbehälter 3 begrenzt gemeinsam mit der genannten Tür einen Aufnahmeraum 1 für das zu reinigende Spülgut, wobei dieses beispielsweise in entsprechende Geschirrkörbe 16 platziert werden kann.

Des Weiteren sind ein oder mehrere, vorzugsweise rotierbare, Spritzdüsen 15 vorhanden, mit deren Hilfe das Spülgut während entsprechender Reinigungsabschnitte eines Spülprogramms mit Spülflotte bespritzbar ist.

Die Spülflotte sammelt sich während des Betriebs der Geschirrspülmaschine in einem Pumpensumpf 17, von dem es mit Hilfe einer Pumpe 19 abgepumpt und über diverse Leitungen 18 den Spritzdüsen 15 zugeführt wird. Darüber hinaus sind mit dem Pumpensumpf 17 in der Regel weitere Leitungen 18 verbunden, die beispielsweise mit einem Frischwasseranschluss oder einem Abwasseranschluss in Verbindung stehen können (diese sind in Figur 1 nur angedeutet und verlaufen vom Pumpensumpf 17 nach rechts).

Ferner ist eine Steuer- und/oder Regeleinheit 8 vorhanden, in der verschiedene Spülprogramme hinterlegt sein können, und die ausgebildet ist, die Geschirrspülmaschine bzw. deren einzelne Funktionseinheiten entsprechend des jeweils ausgewählten Spülprogramms zu betreiben.

Schließlich weisen bekannte Geschirrspülmaschinen teilweise bereits Wärmespeicher 4 auf, über den dem Spülbehälter 3 und damit der darin zirkulierenden Spülflotte Wärme entzogen werden kann, um sie in einem späteren Programmabschnitt des Spülprogramms oder einem nachfolgenden Spülprogramm wieder dem der Geschirrspülmaschine zugeführten Frischwasser oder der bereits vorhandenen Spülflotte zuführen zu können. In der Regel handelt es sich bei dem Wärmespeicher 4 um einen Wassertank, der über nicht gezeigte Leitungsabschnitte mit dem Aufnahmeraum 1 bzw. einem Frischwasserzulauf und/oder einem Abwasserablauf verbunden ist.

Da der Wärmespeicher 4 direkt an zumindest eine der Wandungen 2 des Spülbehälters 3 angrenzt, wird die Wärmeübertragung zwischen der entsprechenden Wandung 2 und damit der in der Geschirrspülmaschine vorhandenen Spülflotte einerseits und dem Wärmespeicher 4 andererseits ausschließlich durch das Temperaturgefälle zwischen dem innerhalb des Wärmespeichers 4 vorhandenen Wärmespeichermaterial 12 und der Spülflottentemperatur bzw. deren Zirkulationsbedingungen bestimmt.

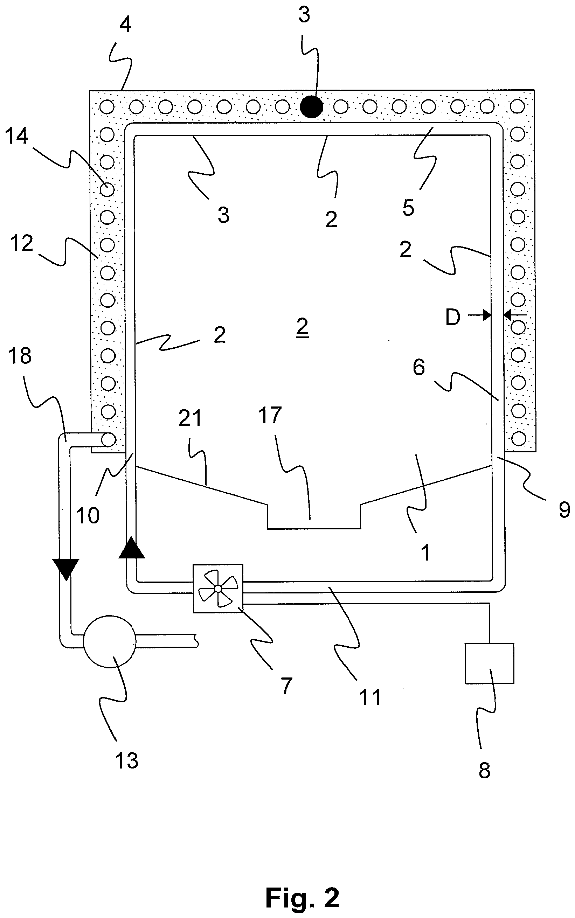

Um nun die genannte Wärmeübertragung gezielt beeinflussen zu können, wird erfindungsgemäß eine Anordnung vorgeschlagen, wie sie beispielhaft in Figur 2 gezeigt ist.

Zwar ist auch in der Ausführungsform gemäß Figur 2 ein Wärmespeicher 4 vorhanden, der beispielsweise mit einem Phase Change Material als Wärmespeichermaterial 12 befüllt sein kann. Im Gegensatz zu Figur 1 grenzt der Wärmespeicher 4 jedoch nicht direkt an die Wandungen 2 des Spülbehälters 3. Vielmehr ist zwischen dem Wärmespeicher 4 und den jeweils benachbarten Wandungen 2 ein Spalt 5 vorhanden, der den Wärmespeicher 4 von dem Spülbehälter 3 räumlich beabstandet. Der Spalt 5 verläuft vorzugsweise größtenteils parallel zur jeweils benachbarten Wandung 2 und erstreckt sich senkrecht zur Blattebene bevorzugt über einen Großteil der jeweils benachbarten Wandung 2, so dass der Spalt 5 im Prinzip eine Trogform aufweist. Die senkrecht zur jeweils benachbarten Wandung 2 verlaufende Dicke D des Spalts 5 beträgt vorzugsweise (zumindest größtenteils) nur wenige Millimeter. Selbstverständlich kann sich der Spalt 5 auch nur über eine oder zwei Wandungen 2 oder aber auch über die hintere Wandung 2 erstrecken.

In der in Figur 2 gezeigten bevorzugten Ausführungsform umfasst der Spalt 5 im Bereich einer ersten seitlichen Wandung 2 des Spülbehälters 3 einen Gaseinlass 10 und im Bereich der gegenüberliegenden Wandung 2 einen Gasauslass 9. Der Gaseinlass 10 und der Gasauslass 9 stehen wiederum über eine unterhalb des Bodenbereichs 21 des Spülbehälters 3 angeordnete, beispielsweise rohrförmige, Gasleitung 11 in Fluidverbindung, so dass ein geschlossener Hohlraum 6 vorhanden ist, der sich aus dem Spalt 5 und der Gasleitung 11 zusammensetzt.

Um nun die Wärmeübertragung zwischen dem Spülbehälter 3 und dem Wärmespeichermaterial 12 zu regulieren, ist ein Lüfter 7 vorhanden, der beispielsweise in die Gasleitung 11 oder alternativ in den Spalt 5 integriert ist. Steht der Lüfter 7 still, so ist die Wärmeübertragung minimal, d. h., der Spülbehälter 3 ist gegenüber dem Wärmespeicher 4 maximal isoliert. Dies ist beispielsweise wünschenswert während eines Reinigungsabschnitts des Spülprogramms, bei dem die Spülflotte aufgeheizt werden soll, um die Reinigungswirkung zu erhöhen.

Soll hingegen eine Wärmeübertragung zwischen Spülbehälter 3 und dem Wärmespeichermaterial 12 bewirkt werden, so wird der Lüfter 7 mit Hilfe der Steuer- und/oder Regeleinheit 8 aktiviert und mit entsprechend in der Steuer- und/oder Regeleinheit 8 hinterlegter Drehzahl betrieben, wobei die Wärmeübertragung mit zunehmender Lüfterdrehzahl steigt (das Gas bewegt sich in diesem Fall in Richtung des im Bereich der Gasleitung 11 gezeigten schwarzen Pfeils durch den Hohlraum 6).

Während der Lüfter 7 ausschließlich auf Basis von in der Steuer- und/oder Regeleinheit 8 hinterlegten Vorgaben geregelt werden kann, ist es auch denkbar, eine oder mehrere Kenngrößen des Wärmespeichermaterials 12 zu berücksichtigen. Beispielsweise könnte ein Sensor 20 vorhanden sein, der die Temperatur des Wärmeträgermaterials detektiert und an die Steuer- und/oder Regeleinheit 8 zur Auswertung und Berücksichtigung bei der Drehzahlregulierung weitergibt.

Schließlich kann die Geschirrspülmaschine eine nur schematisch angedeutete Wärmepumpenanordnung 13 aufweisen, die neben dem gezeigten Verdampferrohr 14 (das sich senkrecht zur Blattebene hin und her erstreckt) einen nicht gezeigten Verdichter, ein nicht gezeigtes Expansionsventil sowie einen Wärmetauscher umfasst, mit dessen Hilfe die aus dem Wärmeträgermaterial abgezogene Wärme (symbolisiert durch den schwarten Pfeil) auf die im Inneren des Spülbehälters 3 zirkulierende Spülflotte übertragbar ist (die generelle Funktionsweise der Wärmepumpenanordnung 13 wurde bereits weiter oben näher beschrieben).

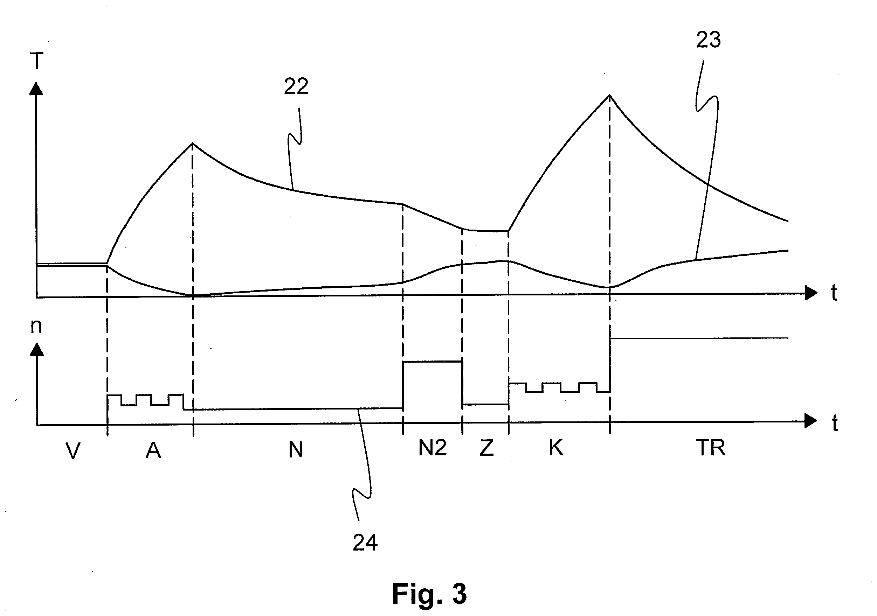

Einen möglichen Verlauf ausgewählter Größen während eines Spülprogramms zeigt Figur 3. Dargestellt sind neben dem Drehzahlverlauf 24 des Lüfters 7 der Temperaturverlauf 22 der Spülflotte und der Temperaturverlauf 23 des Wärmespeichermaterials 12. Während der Drehzahlverlauf 24 des Lüfters 7 die Drehzahl n (Y-Achse) des Lüfters 7 in Abhängigkeit der Zeit t (X-Achse) widergibt, ist dem Temperaturverlauf 22 der Spülflotte deren Temperatur T (Y-Achse) in Abhängigkeit der Zeit t (X-Achse) und dem Temperaturverlauf 23 des Wärmespeichermaterials 12 dessen Temperatur T (Y-Achse) in Abhängigkeit der Zeit t (X-Achse) zu entnehmen.

Im Folgenden wird der dargestellte Verlauf eines als Beispiel dienenden Spülprogramms näher erläutert (wobei einzelne der beschriebenen Programmabschnitte auch weggelassen oder mehrmals durchlaufen werden können oder einzelne der beschriebenen Parameter, wie beispielsweise die Lüfterdrehzahl n, von dem nachfolgenden Beispiel abweichend gewählt werden können).

Zunächst wird das innerhalb des Spülbehälters 3 platzierte Spülgut im Rahmen eines Vorspülabschnitts V vorgespült, d. h. mit Spülflotte bespritzt. Die Spülflotte wird im gezeigten Beispiel nicht aktiv erwärmt, der Lüfter 7 steht vorzugsweise still. Somit ändert sich auch die Temperatur T des Wärmespeichermaterials 12 in diesem Abschnitt nicht.

Als nächstes folgt ein Reinigungsabschnitt, der eine Aufheizphase A, in der die Spülflotte erwärmt wird, und eine Nachwaschphase umfasst, die im gezeigten Beispiel grafisch in eine erste Nachwaschphase N1 und eine zweite Nachwaschphase N2 unterteilt ist.

Vorzugsweise wird die Spülflotte während der Aufheizphase A erwärmt, um die Reinigungswirkung der Spülflotte beim Kontakt mit dem verunreinigten Spülgut zu verbessern. Umfasst die Geschirrspülmaschine eine Wärmepumpenanordnung 13 (die vorzugsweise gemäß obiger Beschreibung ausgebildet ist), so wird beim Betrieb derselben Wärme aus dem Wärmespeicher 4 entnommen und über den nicht gezeigten Kondensator der Wärmepumpenanordnung 13 der Spülflotte zugeführt. Hierdurch kommt es zur Erwärmung der Spülflotte und gleichzeitig zur Abkühlung des Wärmespeichers 4 bzw. dessen Wärmespeichermaterials 12. Um die entstehende Temperaturdifferenz aus Gründen eines guten Wirkungsgrads der Wärmepumpenanordnung 13 in definierten Grenzen zu halten, ist es zweckdienlich, den Lüfter 7 während der Aufheizphase A zumindest abschnittsweise, vorzugsweise pulsartig, zu betreiben, so dass auch immer wieder Wärme vom Spülbehälter auf den Wärmespeicher 4 übertragen wird.

Als nächster Schritt folgt in der Regel eine erste Nachwaschphase N1, während derer das Spülgut mehrfach mit der Spülflotte bespritzt wird, um Verunreinigungen abzulösen. Hierbei ist ein thermische Isolation des Spülbehälters 3 wünschenswert, so dass der Lüfter 7 während dieser Phase vorzugsweise überhaupt nicht oder nur mit verhältnismäßig geringer Drehzahl betrieben werden sollte, um die Wärmeübertragung vom Spülbehälter 3 auf den Wärmespeicher 4 zu erschweren. Wie Figur 3 zeigt, kommt es in dieser Phase nur zu einer geringen Abkühlung der Spülflotte bzw. einer geringen Erwärmung des Wärmespeichers 4.

Im weiteren Verlauf ist es schließlich sinnvoll, möglichst viel der in der Spülflotte enthaltenen Wärme auf den Wärmespeicher 4 bzw. dessen Wärmespeichermaterial 12 zu übertragen. Grund hierfür ist, dass die Spülflotte am Ende des Reinigungsabschnitts ganz oder zumindest teilweise aus der Geschirrspülmaschine abgepumpt wird (um vor allem die in der Spülflotte enthaltenen Verunreinigungen zu entfernen). Deshalb ist es von Vorteil, wenn am Ende der zweiten Nachwaschphase N2 der Lüfter 7, vorzugsweise durchgängig, betrieben wird, um die Wärmeübertragung vom Spülbehälter 3 auf den Wärmespeicher 4 zu verbessern.

Im weiteren Verlauf und damit vor oder kurz nach dem genannten Abpumpen der Spülflotte kann eine Zwischenspülphase Z vorgesehen sein, während der das Spülgut nochmals mit der nunmehr abgekühlten Spülflotte bespritzt wird, um noch vorhandene Verunreinigungen abzuspülen. Hier wird der Lüfter 7 vorzugsweise überhaupt nicht oder mit gegenüber der zweiten Nachwaschphase N2 reduzierter Drehzahl n betrieben.

Als nächstes folgt ein Klarspülabschnitt K, während dem die vorhandene Spülflotte (diese kann mittlerweile aus neu hinzugegebenem Wasser und zugesetztem Klarspüler bestehen) erwärmt wird, um das Spülgut für den nachfolgenden Trocknungsabschnitt TR zu erwärmen. In diesem Abschnitt wird wiederum die Wärmepumpenanordnung 13 betrieben, um im Wärmespeicher 4 zwischengespeicherte Wärme auf die Spülflotte zu übertragen. Wie auch während der Aufheizphase A ist es in diesem Abschnitt sinnvoll, den Lüfter 7, vorzugsweise pulsartig, zu betreiben, um den Wirkungsgrad der Wärmepumpenanordnung 13 zu optimieren.

Abschließend durchläuft das Spülprogramm den bereits genannten Trocknungsabschnitt TR, dessen Ziel es ist, das zuvor gespülte Spülgut zu trocknen. Hierfür muss Wärme aus dem Spülbehälter 3, insbesondere von dessen Wandungen 2 (oder zumindest eines Teils derselben) abgeführt werden, um die Kondensation an den dem Aufnahmeraum 1 zugewandten Oberflächenabschnitten der Wandungen 2 zu forcieren. Es ist daher von Vorteil, den Lüfter 7 in diesem Abschnitt des Spülprogramms mit möglichst hoher Drehzahl n zu betreiben, da hierdurch die Wärmeübertragung vom Spülbehälter 3 auf den Wärmespeicher 4 verbessert wird. Die vom Wärmespeicher 4 aufgenommene Wärme wird schließlich bis zum Beginn eines neuen Spülprogramms zwischengespeichert und kann schließlich wieder der Erwärmung der Spülflotte während der Aufheizphase A des entsprechenden Spülprogramms dienen.

Im Übrigen ist die Erfindung nicht auf das dargestellte Ausführungsbeispiel beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

Ein Ziel der Erfindung ist also ein während eines Spülzyklus variabel einstellbarer Wärmedurchgang durch einen Wandaufbau.

Generell ist der Leitwert einer Wärmedämmung abhängig vom eingesetzten Material und im Stand der Technik konstant und nicht variabel einstellbar während eines Spüldurchgangs.

Der Erfindung liegt die Erkenntnis zugrunde, dass sich die Wärmeübergangskoeffizienten auf beiden Seiten einer Wand verändern, wenn ein Luftraum zwischen zwei Wänden in Bewegung gesetzt wird.

Wenn zusätzlich der Luftstrom durch die zwei Wände wieder zurückgeführt wird, ist der Wärmestrom von der Wand 2 zur Wand 1 stark abhängig vom Volumenstrom der Luft. Bildlich beschrieben: Die an der heißen Wand vorbeiströmende Luft nimmt die Wärme auf, wird homogen vermischt und gibt diese wieder an der Wand mit tieferer Temperatur ab. Die Menge der transportierten Energie ist abhängig vom Volumenstrom.

Dieses Prinzip in einen Geschirrspüler eingebaut kann folgendermaßen erreicht werden: Zwischen dem Bitumen einer Geschirrspülerwand und einem PCM ist ein geringer Luftspalt (1 - 5 mm) vorhanden. Wenn kein Volumenstrom in diesem Luftspalt vorhanden ist (v = 0), ist die Wärmeleitung vom Spülbehälter in das PCM (Phase Change Material) sehr gering, da stehende Luft einen sehr geringen Wärmeleitfähigkeit (λ ca. 0.025 W/m/K) aufweist. Wenn die Luft in Bewegung gesetzt wird, wird je nach Strömungsgeschwindigkeit und dem umgesetztem Volumenstrom die Wärmeenergie von einer Wand zur gegenüberliegenden Wand, bzw. vom Innenraum des Spülbehälters in das PCM transportiert.

Zusätzlicher Vorteil: Ist nur in einer Wand ein Verdampfer einer Wärmepumpe integriert, so kann bei genügend hohem Massenstrom der Luft die Energie von der wärmeren Seite zur kälteren Seite transportiert werden.

Weiterer Vorteil; Wenn die Energie in einer Spülphase (z. B. in der Nachwaschphase) vom Spülbehälter in das PCM geleitet werden soll, um das PCM energetisch wieder zu laden, so kann der Zeitpunkt und die Stärke über den Volumenstrom gesteuert werden.

Zusätzlich kann über einen Sensor (z. B. Temperatursensor im PCM) der Volumenstrom variabel oder nach einem festen Programm geregelt werden.

Vorteile der Erfindung:
- Einfacher Aufbau einer über den Volumenstrom der Luft einstellbare oder regelbare Wärmeleitwert.
- Transport der Kälteenergie in sämtlichen Wandungen des Geschirrspülers über einen Strömungskanal.
- Trocknungsrate über den Volumenstrom einstellbar bzw. regelbar.
- Über Sensoren (Temperatursensor im PCM) und regelbarem Lüfter kann die Wärmemenge gesteuert werden, welche in die Wandungen transportiert wird.

### Bezugszeichenliste

- 1.: Aufnahmeraum
- 2.: Wandung
- 3.: Spülbehälter
- 4.: Wärmespeicher
- 5.: Spalt
- 6.: Hohlraum
- 7.: Lüfter
- 8.: Steuer- und/oder Regeleinheit
- 9.: Gasauslass
- 10.: Gaseinlass
- 11.: Gasleitung
- 12.: Wärmespeichermaterial
- 13.: Wärmepumpenanordnung
- 14.: Verdampferrohr
- 15.: Spritzdüse
- 16.: Geschirrkorb
- 17.: Pumpensumpf
- 18.: Leitung
- 19.: Pumpe
- 20.: Sensor
- 21.: Bodenbereich
- 22.: Temperaturverlauf der Spülflotte
- 23.: Temperaturverlauf des Wärmespeichermaterials
- 24.: Drehzahlverlauf des Lüfters

- D: Dicke des Spalts

- V: Vorspülabschnitt
- A: Aufheizphase des Reinigungsabschnitts
- N1: erste Nachwaschphase des Reinigungsabschnitts
- N2: zweite Nachwaschphase des Reinigungsabschnitts
- Z: Zwischenspülphase
- K: Klarspülabschnitt
- TR: Trocknungsabschnitt

- n: Drehzahl des Lüfters
- T: Temperatur
- t: Zeit

## Patentansprüche

1. Geschirrspülmaschine mit einem der Aufnahme von zu reinigendem Spülgut dienenden Aufnahmeraum (1), wobei der Aufnahmeraum (1) durch Wandungen (2) eines Spülbehälters (3) und eine Tür nach außen hin begrenzt ist, und wobei die Geschirrspülmaschine zumindest einen Wärmespeicher (4) aufweist, der außerhalb des Spülbehälters (3) angeordnet ist und der von zumindest einer Wandung (2) des Spülbehälters (3) zumindest größtenteils durch einen Spalt (5) beabstandet ist, **dadurch gekennzeichnet, dass** der Spalt (5) Teil eines abgeschlossenen und mit einem Gas gefüllten Hohlraums (6) ist oder einen solchen bildet, wobei der Hohlraum (6) keine Fluidverbindung mit dem Aufnahmeraum (1) aufweist, und wobei die Geschirrspülmaschine wenigstens einen Lüfter (7) aufweist, der in den Hohlraum (6) integriert ist und mit einer Steuer- und/oder Regeleinheit (8) der Geschirrspülmaschine in Wirkverbindung steht, die ausgebildet ist, den Lüfter (7) lediglich während ausgewählter Programmabschnitte eines in der Steuer- und/oder Regeleinheit (8) hinterlegten Spülprogramms zu betreiben und damit eine zeitweise Umwälzung des sich im Hohlraum (6) befindlichen Gases zu bewirken, um hierdurch die Wärmeübertragung zwischen dem Spülbehälter (3) und dem Wärmespeicher (4) zu verbessern.

2. Geschirrspülmaschine gemäß dem vorangegangenen Anspruch, **dadurch gekennzeichnet, dass** sich der Spalt (5) zumindest über den Großteil zweier benachbarter Wandungen (2) des Spülbehälters (3) erstreckt.

3. Geschirrspülmaschine gemäß einem der vorangegangenen Ansprüche, **dadurch gekennzeichnet, dass** sich der Spalt (5) über zwei seitliche Wandungen (2) und eine obere Wandung (2) erstreckt, so dass sich in einer Frontansicht der Geschirrspülmaschine ein U-förmiger Spalt (5) ergibt.

4. Geschirrspülmaschine gemäß einem der vorangegangenen Ansprüche, **dadurch gekennzeichnet, dass** der Spalt (5) zumindest abschnittsweise eine senkrecht zur benachbarten Wandung (2) verlaufende Dicke (D) aufweist, deren Betrag 0,5 mm bis 15 mm, vorzugsweise 1 mm bis 5 mm, beträgt.

5. Geschirrspülmaschine gemäß einem der vorangegangenen Ansprüche, **dadurch gekennzeichnet, dass** der Spalt (5) einen Gaseinlass (10) und einen Gasauslass (9) aufweist, wobei sich zwischen dem Gaseinlass (10) und dem Gasauslass (9) eine, vorzugsweise rohrförmige, Gasleitung (11) erstreckt, und wobei der Hohlraum (6) durch den Spalt (5) und die Gasleitung (11) gebildet ist.

6. Geschirrspülmaschine gemäß dem vorangegangenen Anspruch, **dadurch gekennzeichnet, dass** der Gaseinlass (10) im Bereich einer ersten seitlichen Wandung (2) des Spülbehälters (3) und der Gasauslass (9) im Bereich einer zweiten seitlichen Wandung (2) des Spülbehälters (3) angeordnet ist.

7. Geschirrspülmaschine gemäß einem der vorangegangenen Ansprüche, **dadurch gekennzeichnet, dass** der Wärmespeicher (4) als Latentwärmespeicher ausgebildet ist.

8. Geschirrspülmaschine gemäß einem der vorangegangenen Ansprüche, **dadurch gekennzeichnet, dass** die Steuer- und/oder Regeleinheit (8) ausgebildet ist, den Lüfter (7) während eines Trocknungsabschnitts, während dessen eine Trocknung des sich im Spülbehälter (3) befindlichen Spülguts gewünscht ist, mit höherer Drehzahl zu betreiben als während eines Reinigungsabschnitts, in dem das sich im Spülbehälter (3) befindliche Spülgut mit erwärmter Spülflotte zur Reinigung des Spülguts beaufschlagt wird.

9. Geschirrspülmaschine gemäß einem der vorangegangenen Ansprüche, **dadurch gekennzeichnet, dass** die Geschirrspülmaschine wenigstens einen Sensor aufweist, mit dessen Hilfe sich eine oder mehrere physikalische Kenngrößen, vorzugsweise die Temperatur, eines Wärmespeichermaterials (12) des Wärmespeichers (4) überwachen lässt, und dass die Steuer- und/oder Regeleinheit (8) ausgebildet ist, die Drehzahl des Lüfters (7) unter Berücksichtigung des Betrags der überwachten Kenngröße(n) zu regulieren.

10. Geschirrspülmaschine gemäß einem der vorangegangenen Ansprüche, **dadurch gekennzeichnet, dass** die Geschirrspülmaschine eine Wärmepumpenanordnung (13) umfasst, mit deren Hilfe Wärme vom Wärmespeicher (4) auf eine während des Betriebs der Geschirrspülmaschine zumindest zeitweise innerhalb der Geschirrspülmaschine zirkulierende Spülflotte übertragbar ist.

11. Geschirrspülmaschine gemäß dem vorangegangenen Anspruch, **dadurch gekennzeichnet, dass** die Wärmepumpenanordnung (13) zumindest ein Verdampferrohr (14) umfasst, das zumindest abschnittsweise von einem Wärmespeichermaterial (12) des Wärmespeichers (4) umgeben ist.

12. Verfahren zum Betreiben einer Geschirrspülmaschine, vorzugsweise einer Geschirrspülmaschine gemäß einem der vorangegangenen Ansprüche, wobei die Geschirrspülmaschine einen der Aufnahme von zu reinigendem Spülgut dienenden Aufnahmeraum (1) aufweist, wobei der Aufnahmeraum (1) durch Wandungen (2) eines Spülbehälters (3) und eine Tür nach außen hin begrenzt ist, und wobei die Geschirrspülmaschine zumindest einen Wärmespeicher (4) aufweist, der außerhalb des Spülbehälters (3) angeordnet ist und der von zumindest einer Wandung (2) des Spülbehälters (3) zumindest größtenteils durch einen Spalt (5) beabstandet ist, **dadurch gekennzeichnet, dass** der Spalt (5) Teil eines abgeschlossenen und mit einem Gas gefüllten Hohlraums (6) der Geschirrspülmaschine ist und das Gas während wenigstens eines Programmabschnitts eines Spülprogramms, während dessen Wärme vom Spülbehälter (3) auf den Wärmespeicher übertragen werden soll, mit Hilfe eines Lüfters (7) innerhalb des Hohlraums umgewälzt wird, um die Wärmeübertragung zwischen dem Spülbehälter (3) und dem Wärmespeicher (4) zu verbessern.

13. Verfahren gemäß dem vorangegangenen Anspruch, **dadurch gekennzeichnet, dass** das im Hohlraum (6) vorhandene Gas während eines Trocknungsabschnitts (TR) des Spülprogramms, während dessen eine Trocknung des sich im Spülbehälter (3) befindlichen Spülguts gewünscht ist, zumindest zeitweise umgewälzt wird, um Wärme von dem Spülbehälter (3) auf den Wärmespeicher (4) zu übertragen.

14. Verfahren gemäß Anspruch 12 oder 13, **dadurch gekennzeichnet, dass** das im Hohlraum (6) vorhandene Gas am Ende eines Reinigungsabschnitts des Spülprogramms, während dessen das sich im Spülbehälter (3) befindliche Spülgut mit erwärmter Spülflotte zur Reinigung des Spülguts beaufschlagt wird, zumindest zeitweise umgewälzt wird, um Wärme von dem Spülbehälter (3) auf den Wärmespeicher (4) zu übertragen.

15. Verfahren gemäß einem der Ansprüche 12 bis 14, **dadurch gekennzeichnet, dass** das im Hohlraum (6) vorhandene Gas während eines Trocknungsabschnitts (TR) des Spülprogramms, während dessen eine Trocknung des sich im Spülbehälter (3) befindlichen Spülguts gewünscht ist, zumindest zeitweise stärker umgewälzt wird als während einer Aufheizphase (A) eines Reinigungsabschnitts des Spülprogramms, während dessen das sich im Spülbehälter (3) befindliche Spülgut mit erwärmter Spülflotte zur Reinigung des Spülguts beaufschlagt wird.

16. Verfahren gemäß einem der Ansprüche 12 bis 15, **dadurch gekennzeichnet, dass** die Geschirrspülmaschine eine Wärmepumpenanordnung (13) umfasst, wobei mit Hilfe der Wärmepumpenanordnung (13) während definierter Abschnitte des Spülprogramms Wärme vom Wärmespeicher (4) auf die Spülflotte übertragen wird.

17. Verfahren gemäß dem vorangegangenen Anspruch, **dadurch gekennzeichnet, dass** das im Hohlraum (6) vorhandene Gas zumindest zeitweise umgewälzt wird, während mit Hilfe der Wärmepumpenordnung (13) Wärme vom Wärmespeicher (4) auf die Spülflotte übertragen wird.

18. Verfahren gemäß Anspruch 16 oder 17, **dadurch gekennzeichnet, dass** der Lüfter (7) während Abschnitten, in denen mit Hilfe der Wärmepumpenordnung (13) Wärme vom Wärmespeicher (4) auf die Spülflotte übertragen wird, zumindest zeitweise pulsartig betrieben wird.

19. Verfahren gemäß einem der Ansprüche 16 bis 18, **dadurch gekennzeichnet, dass** der Lüfter (7) während Abschnitten, in denen mit Hilfe der Wärmepumpenordnung (13) Wärme vom Wärmespeicher (4) auf die Spülflotte übertragen wird, zumindest abschnittsweise mit geringerer Drehzahl betrieben wird, als während Abschnitten, in denen Wärme bei deaktivierter Wärmepumpenanordnung vom Spülbehälter (3) auf den Wärmespeicher (4) übertragen wird.

20. Verfahren gemäß einem der Ansprüche 12 bis 17, **dadurch gekennzeichnet, dass** die Drehzahl des Lüfters (7) mit Hilfe der Steuer- und/oder Regeleinheit (8) unter Berücksichtigung einer oder mehrerer physikalischer Kenngrößen eines Wärmespeichermaterials (12) des Wärmespeichers (4) reguliert wird.

## Claims

1. Dishwasher with an accommodating space (1) that serves to accommodate items to be washed, wherein the accommodating space (1) is delimited towards the outside by walls (2) of a dishwasher cavity (3) and a door, and wherein the dishwasher has at least one heat storage unit (4), which is arranged outside the dishwasher cavity (3) and which is spaced apart from at least one wall (2) of the dishwasher cavity (3), at least for the most part, by a gap (5), **characterised in that** the gap (5) is or forms part of a hollow space (6) which is closed off and filled with a gas, wherein the hollow space (6) has no fluid connection with the accommodating space (1), and wherein the dishwasher has at least one fan (7), which is integrated into the hollow space (6) and has an active connection with a control and/or regulation unit (8) of the dishwasher, which is embodied to operate the fan (7) only during selected program sections of a washing program stored in the control and/or regulation unit (8) and therefore to bring about a temporary circulation of the gas located in the hollow space (6), in order to hereby improve the transfer of heat between the dishwasher cavity (3) and the heat storage unit (4).

2. Dishwasher according to the preceding claim, **characterised in that** the gap (5) extends at least over the majority of two adjacent walls (2) of the dishwasher cavity (3).

3. Dishwasher according to one of the preceding claims, characterised in that the gap (5) extends over two side walls (2) and an upper wall (2), so that a U-shaped gap (5) is produced in a front view of the dishwasher.

4. Dishwasher according to one of the preceding claims, **characterised in that** the gap (5) has, at least in sections, a thickness (D) which runs perpendicularly to the adjacent wall (2) and has an absolute value from 0.5 mm to 15 mm, preferably 1 mm to 5 mm.

5. Dishwasher according to one of the preceding claims, **characterised in that** the gap (5) has a gap inlet (10) and a gas outlet (9), wherein a, preferably tubular, gas line (11) extends between the gas inlet (10) and the gas outlet (9), and wherein the hollow space (6) is formed by the gap (5) and the gas line (11).

6. Dishwasher according to the preceding claim, **characterised in that** the gas inlet (10) is arranged in the region of a first side wall (2) of the dishwasher cavity (3) and the gas outlet (9) is arranged in the region of a second side wall (2) of the dishwasher cavity (3).

7. Dishwasher according to one of the preceding claims, **characterised in that** the heat storage unit (4) is embodied as a latent heat storage unit.

8. Dishwasher according to one of the preceding claims, **characterised in that** the control and/or regulation unit (8) is embodied, during a drying section, during which a drying of the items to be washed located in the dishwasher cavity (3) is desired, to operate the fan (7) at a higher rotational speed than during a cleaning section, in which heated washing liquor is applied to the items to be washed located in the dishwasher cavity (3) in order to clean the items to be washed.

9. Dishwasher according to one of the preceding claims, **characterised in that** the dishwasher has at least one sensor, with the aid of which one or more physical characteristic variables, preferably the temperature, of a heat storage material (12) of the heat storage unit (4) can be monitored, and the control and/or regulation unit (8) is embodied to regulate the rotational speed of the fan (7) taking into consideration the absolute value of the monitored characteristic variable(s).

10. Dishwasher according to one of the preceding claims, **characterised in that** the dishwasher comprises a heat pump arrangement (13), with the aid of which heat can be transferred from the heat storage unit (4) to a washing liquor which at least temporarily circulates within the dishwasher during the operation of the dishwasher.

11. Dishwasher according to the preceding claim, **characterised in that** the heat pump arrangement (13) comprises at least one evaporator tube (14), which is surrounded by a heat storage material (12) of the heat storage unit (4), at least in sections.

12. Method for operating a dishwasher, preferably a dishwasher according to one of the preceding claims, wherein the dishwasher has an accommodating space (1) that serves to accommodate items to be washed, wherein the accommodating space (1) is delimited towards the outside by walls (2) of a dishwasher cavity (3) and a door, and wherein the dishwasher has at least one heat storage unit (4), which is arranged outside the dishwasher cavity (3) and which is spaced apart from at least one wall (2) of the dishwasher cavity (3), at least for the most part, by a gap (5), **characterised in that** the gap (5) is part of a hollow space (6) of the dishwasher which is closed off and filled with a gas, and during at least one program section of a washing program, during which heat is to be transferred from the dishwasher cavity (3) to the heat storage unit, the gas is circulated with the aid of a fan (7) within the hollow space, in order to improve the transfer of heat between the dishwasher cavity (3) and the heat storage unit (4).

13. Method according to the preceding claim, **characterised in that**, during a drying section (TR) of the washing program, during which a drying of the items to be washed located in the dishwasher cavity (3) is desired, the gas present in the hollow space (6) is at least temporarily circulated, in order to transfer heat from the dishwasher cavity (3) to the heat storage unit (4).

14. Method according to claim 12 or 13, **characterised in that**, at the end of a cleaning section of the washing program, during which heated washing liquor is applied to the items to be washed located in the dishwasher cavity (3) in order to clean the items to be washed, the gas present in the hollow space (6) is at least temporarily circulated, in order to transfer heat from the dishwasher cavity (3) to the heat storage unit (4).

15. Method according to one of claims 12 to 14, **characterised in that**, during a drying section (TR) of the washing program, during which a drying of the items to be washed located in the dishwasher cavity (3) is desired, the gas present in the hollow space (6) is circulated at least temporarily more powerfully than during a heating phase (A) of a cleaning section of the washing program, during which heated washing liquor is applied to the items to be washed located in the dishwasher cavity (3) in order to clean the items to be washed.

16. Method according to one of claims 12 to 15, **characterised in that** the dishwasher comprises a heat pump arrangement (13), wherein heat is transferred from the heat storage unit (4) to the washing liquor with the aid of the heat pump arrangement (13) during defined sections of the washing program.

17. Method according to the preceding claim, **characterised in that** gas present in the hollow space (6) is at least temporarily circulated, while heat from the heat storage unit (4) is transferred to the washing liquor with the aid of the heat pump arrangement (13).

18. Method according to claim 16 or 17, **characterised in that** the fan (7) is operated at least temporarily in a pulse-like manner during sections, in which heat is transferred from the heat storage unit (4) to the washing liquor with the aid of the heat pump arrangement (13).

19. Method according to one of claims 16 to 18, **characterised in that**, during sections in which heat is transferred from the heat storage unit (4) to the washing liquor with the aid of the heat pump arrangement, the fan (7) is operated at least in sections at a lower rotational speed than during sections, in which heat is transferred from the dishwasher cavity (3) to the heat storage unit (4) when the heat pump arrangement is deactivated.

20. Method according to one of claims 12 to 17, **characterised in that** the rotational speed of the fan (7) is regulated with the aid of the control and/or regulation unit (8), taking into consideration one or more physical characteristic variables of a heat storage material (12) of the heat storage unit (4).

## Revendications

1. Lave-vaisselle avec un espace d'accueil (1) servant à accueillir de la vaisselle à laver, dans lequel l'espace d'accueil (1) est limité par les parois (2) d'une cuve de lavage (3) et une porte vers l'extérieur, et dans lequel le lave-vaisselle présente au moins un accumulateur de chaleur (4) disposé en dehors de la cuve de lavage (3) et espacé d'au moins une paroi (2) de la cuve de lavage (3) au moins en majeure partie par une fente (5), **caractérisé en ce que** la fente (5) fait partie d'une cavité (6) fermée et remplie d'un gaz ou en constitue une, dans lequel la cavité (6) ne présente aucune liaison fluidique avec l'espace d'accueil (1), et dans lequel le lave-vaisselle présente au moins un ventilateur (7), qui est intégré à la cavité (6) et en liaison fonctionnelle avec une unité de commande et/ou de régulation (8) du lave-vaisselle, formée afin d'exploiter le ventilateur (7) uniquement durant des sections de programme sélectionnées d'un programme de lavage enregistré dans l'unité de commande et/ou de régulation (8) et de provoquer ainsi une recirculation intermittente du gaz se trouvant dans la cavité (6), afin d'améliorer ce faisant l'échange de chaleur entre la cuve de lavage (3) et l'accumulateur de chaleur (4).

2. Lave-vaisselle selon la revendication précédente, **caractérisé en ce que** la fente (5) s'étend au moins sur une grande partie de deux parois (2) voisines de la cuve de lavage (3).

3. Lave-vaisselle selon l'une des revendications précédentes, **caractérisé en ce que** la fente (5) s'étend sur deux parois (2) latérales et une paroi supérieure (2), de sorte qu'une vue frontale du lave-vaisselle révèle une fente en forme de U (5).

4. Lave-vaisselle selon l'une des revendications précédentes, **caractérisé en ce que** la fente (5) présente au moins par sections une épaisseur (D) s'étendant perpendiculairement à la paroi voisine (2), laquelle atteint 0,5 mm à 15 mm, de préférence 1 mm à 5 mm.

5. Lave-vaisselle selon l'une des revendications précédentes, **caractérisé en ce que** la fente (5) présente une entrée de gaz (10) et une sortie de gaz (9), dans lequel une conduite de gaz (11) de préférence tubulaire s'étend entre l'entrée de gaz (10) et la sortie de gaz (9) et dans lequel la cavité (6) est formée par la fente (5) et la conduite de gaz (11).

6. Lave-vaisselle selon la revendication précédente, **caractérisé en ce que** l'entrée de gaz (10) est disposée dans la zone d'une première paroi latérale (2) de la cuve de lavage (3) et la sortie de gaz (9) est disposée dans la zone d'une deuxième paroi latérale (2) de la cuve de lavage (3).

7. Lave-vaisselle selon l'une des revendications précédentes, **caractérisé en ce que** l'accumulateur de chaleur (4) est formé sous la forme d'un accumulateur de chaleur latente.

8. Lave-vaisselle selon l'une des revendications précédentes, **caractérisé en ce que** l'unité de commande et/ou de régulation (8) est formée afin d'exploiter, durant une section de séchage pendant laquelle un séchage de la vaisselle se trouvant dans la cuve de lavage (3) est souhaité, le ventilateur (7) selon une vitesse de rotation accrue par rapport à celle durant une section de lavage dans laquelle la vaisselle se trouvant dans la cuve de lavage (3) est alimentée en bain de lavage chauffé pour le lavage de la vaisselle.

9. Lave-vaisselle selon l'une des revendications précédentes, **caractérisé en ce que** le lave-vaisselle présente au moins un capteur qui permet de surveiller un ou plusieurs paramètre(s) physique(s), de préférence la température, d'un matériau accumulateur de chaleur (12) de l'accumulateur de chaleur (4) et **en ce que** l'unité de commande et/ou de régulation (8) est formée afin de réguler la vitesse de rotation du ventilateur (7) en tenant compte de la valeur du/des paramètre(s) surveillé(s).

10. Lave-vaisselle selon l'une des revendications précédentes, **caractérisé en ce que** le lave-vaisselle comprend un agencement de pompe à chaleur (13), à l'aide duquel la chaleur de l'accumulateur de chaleur (4) peut être transmise à un bain de lavage circulant au moins par intermittence à l'intérieur du lave-vaisselle durant le fonctionnement du lave-vaisselle.

11. Lave-vaisselle selon la revendication précédente, **caractérisé en ce que** l'agencement de pompe à chaleur (13) comprend au moins un tuyau d'évaporateur (14) entouré au moins par sections d'un matériau accumulateur de chaleur (12) de l'accumulateur de chaleur (4).

12. Procédé d'exploitation d'un lave-vaisselle, de préférence d'un lave-vaisselle conformément à l'une des revendications précédentes, dans lequel le lave-vaisselle présente un espace d'accueil (1) servant à accueillir de la vaisselle à laver, dans lequel l'espace d'accueil (1) est limité par les parois (2) d'une cuve de lavage (3) et une porte vers l'extérieur, et dans lequel le lave-vaisselle présente au moins un accumulateur de chaleur (4) disposé en dehors de la cuve de lavage (3) et espacé d'au moins une paroi (2) de la cuve de lavage (3) au moins en majeure partie par une fente (5), **caractérisé en ce que** la fente (5) fait partie d'une cavité (6) fermée et remplie d'un gaz du lave-vaisselle et le gaz est recirculé durant au moins une section de programme d'un programme de lavage durant laquelle la chaleur de la cuve de lavage (3) est censée être transmise à l'accumulateur de chaleur, à l'aide d'un ventilateur (7) à l'intérieur de la cavité, afin d'améliorer l'échange de chaleur entre la cuve de lavage (3) et l'accumulateur de chaleur (4).

13. Procédé selon la revendication précédente, **caractérisé en ce que** le gaz présent dans la cavité (6) est, durant une section de séchage (TR) du programme de lavage durant laquelle un séchage de la vaisselle se trouvant dans la cuve de lavage (3) est souhaité, recirculé au moins par intermittence afin de transmettre la chaleur de la cuve de lavage (3) à l'accumulateur de chaleur (4).

14. Procédé selon la revendication 12 ou 13, **caractérisé en ce que** le gaz présent dans la cavité (6) est, à la fin d'une section de lavage du programme de lavage durant laquelle la vaisselle se trouvant dans la cuve de lavage (3) est alimentée en bain de lavage chauffé pour le lavage de la vaisselle, recirculé au moins par intermittence afin de transmettre la chaleur de la cuve de lavage (3) à l'accumulateur de chaleur (4).

15. Procédé selon l'une des revendications 12 à 14, **caractérisé en ce que** le gaz présent dans la cavité (6) est, durant une section de séchage (TR) du programme de lavage pendant laquelle un séchage de la vaisselle se trouvant dans la cuve de lavage (3) est souhaité, recirculé au moins par intermittence plus fortement que durant une phase de chauffage (A) d'une section de lavage du programme de lavage pendant laquelle la vaisselle se trouvant dans la cuve de lavage (3) est alimentée en bain de lavage chauffé pour le lavage de la vaisselle.

16. Procédé selon l'une des revendications 12 à 15, **caractérisé en ce que** le lave-vaisselle comprend un agencement de pompe à chaleur (13), dans lequel de la chaleur est transmise de l'accumulateur de chaleur (4) au bain de lavage à l'aide de l'agencement de pompe à chaleur (13) pendant des sections définies du programme de lavage.

17. Procédé selon la revendication précédente, **caractérisé en ce que** le gaz présent dans la cavité (6) est recirculé au moins par intermittence, tandis que de la chaleur est transmise de l'accumulateur de chaleur (4) au bain de lavage à l'aide de l'agencement de pompe à chaleur (13).

18. Procédé selon la revendication 16 ou 17, **caractérisé en ce que** le ventilateur (7) est exploité au moins par intermittence de façon pulsatile durant des sections dans lesquelles de la chaleur est transmise de l'accumulateur de chaleur (4) au bain de lavage à l'aide de l'agencement de pompe à chaleur (13).

19. Procédé selon l'une des revendications 16 à 18, **caractérisé en ce que** le ventilateur (7) est exploité, durant des sections dans lesquelles de la chaleur est transmise à l'aide de l'agencement de pompe à chaleur (13) de l'accumulateur de chaleur (4) au bain de lavage, au moins par sections selon une vitesse de rotation réduite par rapport à celle durant les sections dans lesquelles de la chaleur est transmise de la cuve de lavage (3) à l'accumulateur de chaleur (4) en présence d'un agencement de pompe à chaleur désactivé.

20. Procédé selon l'une des revendications 12 à 17, **caractérisé en ce que** la vitesse de rotation du ventilateur (7) est régulée à l'aide de l'unité de commande et/ou de régulation (8) en tenant compte d'un ou plusieurs paramètre(s) physique(s) d'un matériau accumulateur de chaleur (12) de l'accumulateur de chaleur (4).
